Europäisches Patentamt

(19) European Patent Office

Office européen des brevets

(11) Publication number: **0 284 278 B1**

(12) **EUROPEAN PATENT SPECIFICATION**

(45) Date of publication of patent specification :
04.12.91 Bulletin 91/49

(51) Int. Cl.⁵ : **C10G 47/12, B01J 29/02,**
**C10G 65/12**

(21) Application number : **88302264.2**

(22) Date of filing : **16.03.88**

(54) Production of lubricating oils by hydrocracking.

(30) Priority : **23.03.87 US 28813**

(43) Date of publication of application :
**28.09.88 Bulletin 88/39**

(45) Publication of the grant of the patent :
**04.12.91 Bulletin 91/49**

(84) Designated Contracting States :
**BE DE FR GB IT NL**

(56) References cited :
**EP-A- 0 028 062**
**EP-A- 0 222 597**
**WO-A-88/00091**
**WO-A-88/00176**
**US-A- 3 142 635**
**US-A- 4 176 090**
**US-A- 4 600 503**

(73) Proprietor : **MOBIL OIL CORPORATION**
**150 East 42nd Street**
**New York New York 10017 (US)**

(72) Inventor : **Kirker, Garry Wayne**
**18 Old Mill Road**
**Sewell New Jersey 08080 (US)**
Inventor : **Varghese, Philip**
**8 Chadwick Drive**
**Voorhees New Jersey 08043 (US)**

(74) Representative : **Colmer, Stephen Gary**
**Patent Department c/o Mobil Services**
**Company Limited Mobil Court 3 Clements Inn**
**London WC2A 2EB (GB)**

## Description

This invention is directed to the production of high quality lubricating oils by hydrocracking high boiling hydrocarbons. More particularly, it relates to the production of mineral lubricating oils with uniquely desirable properties from specified essentially non-lube hydrocarbon charge stocks by hydrocracking.

It has, of course, long been recognized that one of the most valuable products of the refining of crude mineral oils is lubricating oil. Common practice is to recover lubricating oil components by extracting undesirable components, such as sulfur compounds, oxygenated compounds and aromatics, from a straight run distillate fraction with a selective solvent. However, with the gradual decline in the availability of paraffinic base crudes and a corresponding increase in the proportion of naphthenic and mixed naphthenic and asphaltic base crudes, it is becoming increasingly difficult to recover sufficient quantities of components suitable for lubricating oils by extraction.

One method which has been suggested as a remedy of this situation is hydrogenation of high boiling hydrocarbon charge stocks which do not contain a substantial quantity of lube oil components in order to produce such components. An example of this method is represented in U.S. Patent No. 3,142,635 teaching the production of very high viscosity index oils in high yields of a unique kind by using a special catalyst. This method teaches the use of hydrocracking catalysts such as platinum on silica-alumina as well as others taught in U.S. Patent No. 2,945,806. The use of such catalysts results in a product of high viscosity index. However, the prior art recognizes that substantial amounts of undesirable low viscosity index polycyclic aromatics which are oxidatively unstable will remain in the lube oil produced by hydrocracking unless removed by distillation. Another way of dealing with such impurities is taught in U.S. Patent No. 3,530,061, which employs hydroprocessing the hydrocracked product with a hydrogenation-dehydrogenation catalyst comprising a support material of low cracking activity, e.g., platinum on alumina at temperatures and pressures which limit conversion. However, this procedure suffers from the drawback of requiring an additional hydroprocessing step. In U.S. Patent No. 4,176,090, catalysts which comprise layered clays (smectites) intercalated with inorganic metal polymers, e.g., aluminum chlorhydrol, which form polymeric cationic hydroxy metal complexes are disclosed as suitable for conventional petroleum conversion processes such as catalytic cracking, hydrocracking, hydrotreating and isomerization. U.S. Patent No. 4,579,832 discloses the use of layered smectite clays, e.g. montmorillonite, which are cross-linked with hydroxy-Al oligomers, as hydrocracking catalysts.

The present invention provides a process for producing a lubricating oil base stock from a hydrocarbon feed by hydrocracking at conventional hydrocracking conditions a hydrocarbon feed boiling in the lube range and containing polycyclic aromatics characterized by use of a hydrocracking catalyst having cracking and hydrogenation activity and comprising a layered silicate containing interspathic polymeric silica and interspathic polymeric oxide of an element selected from the group consisting of Al, B, Cr, Ga, In, Mo, Nb, Ni, Ti, Tl, W and Zr, in order to produce a hydrocrackate boiling in the lube range which contains a lesser proportion of polycyclic aromatics than the feed.

The hydrocracking process can be carried out at temperatures ranging from 300 to 450°C, preferably from 325 to 400°C ; hydrogen pressures ranging from 2 to 21 MPa, preferably from 3 to 21 MPa ; liquid hourly space velocities ranging from 0.1 to 10, preferably from 0.2 to 3 ; $H_2$ circulations ranging from 178 to 1,780 normal liters per liter, (1000 to 10,000 SCFB), preferably 356 to 712 n.l.l.$^{-1}$ (2000 to 6000 SCFB) and conversions to 343°C (650°F-) product of less than 70 percent volume of charge, preferably less than 30 to 50 percent volume of charge.

The feed can be any hydrocarbon feed comprising polycyclic aromatic hydrocarbon compounds which can be converted to other materials by treatment with hydrogen. Generally, it is preferred to use materials boiling above 316 or 343°C (600°F or 650°F). Such materials include heavy gas oils, residual stocks, cycle stocks, topped crudes, reduced crudes and relatively high boiling hydrocarbon fractions of cracking derived from coal, tars, pitches, asphalts and shale oils. These materials can be obtained by fractionation, as by vacuum distillation, of crude oils identified by their source, e.g., Pennsylvania, Mid-Continent, Gulf Coast, West Texas, Amal, Kuwait, Barco and Statfjord. Preferably, feed material obtained from resids should be made substantially free of asphaltenes prior to hydrocracking.

The feed may be treated to reduce or eliminate heteroatom content prior to hydrocracking. The feed may be hydrotreated under mild or moderate conditions to reduce sulfur, nitrogen, oxygen and metal. Feed should have a low metals content, preferably less than 200 ppm, to avoid obstruction of the catalyst and plugging of the catalyst bed. The hydrotreating conditions may include pressures of 2 to 21 MPa and $H_2$ consumptions of 20 to 280 $m^3/m^3$. Conventional hydrotreating conditions and catalysts may be employed, e.g., those set out in U.S. 4,283,272. A method for hydrotreating resids which contain naphthenes and which employs polymeric metal oxide intercalated layered oxides is described in U.S. Patent No. 4,600,503.

When hydrocracked, the feed is converted to lower boiling materials, some of which are unsuitable for use as lube oils. Some of the polycyclic aromatic and naphthenic compounds in the feed are hydrogenated and cracked to lower molecular weight naphthenes and paraffins. Because the polycyclics degrade the viscosity index and stability of the stock, conversion of these materials is desirable, particularly in view of the tendency for paraffins thus made to be isomerized during hydrocracking. Ring opening of polycyclic compounds and isomerization of paraffins reduces the pour point of the hydrocracked products and improves the VI. Because these transformations are accomplished by the catalysts of this invention without excessive cracking to lower molecular weight non-lube products, high yields of low pour, high VI lubes result.

In those cases where a lower pour point lube is desired, the hydrocrackate can be dewaxed by any suitable means, such as solvent dewaxing and catalytic dewaxing. Catalytic dewaxing of lube stocks is described in U.S. Reissue Patent No. 28,398 and in U.S. 3,755,138, 4,176,050 and 4,283,272.

The hydrocracking catalyst employed in the invention is particularly suited to preparing lubes by hydrocracking high boiling hydrocarbon feeds which contain polycyclic aromatics or naphthenes. These catalysts by their inherent structure provide access of polycyclic materials to the dual functional metal-acid components present in the catalyst thereby facilitating conversion to more advantageous materials.

Many layered materials are known which have three-dimensional structures which exhibit their strongest chemical bonding in only two dimensions. In such materials, the stronger chemical bonds are formed in two-dimensional planes and a three-dimensional solid is formed by stacking such planes on top of each other. However, the interactions between the planes are weaker than the chemical bonds holding an individual plane together. The weaker bonds generally arise from interlayer attractions such as Van der Waals forces, electrostatic interactions, and hydrogen bonding. In those situations where the layered structure has electronically neutral sheets interacting with each other solely through Van der Waals forces, a high degree of lubricity is manifested as the planes slide across each other without encountering the energy barriers that arise with strong interlayer bonding. Graphite is an example of such a material. The silicate layers of a number of clay materials are held together by electrostatic attraction mediated by ions located between the layers. In addition, hydrogen bonding interactions can occur directly between complementary sites on adjacent layers, or can be mediated by interlamellar bridging molecules.

Laminated materials such as clays may be modified to increase their surface area. In particular, the distance between the interlamellar layers can be increased substantially by absorption of various swelling agents such as water, ethylene glycol, amines, ketones, etc., which enter the interlamellar space and push the layers apart. However, the interlamellar spaces of such layered materials tend to collapse when the molecules occupying the space are removed by, for example, exposing the clays to high temperatures. Accordingly, such layered materials having enhanced surface area are not suited for use in chemical processes involving even moderately severe conditions.

The extent of interlayer separation can be estimated by using standard techniques such as X-ray diffraction to determine the basal spacing, also known as "repeat distance" or "d-spacing". These values indicate the distance between, for example, the uppermost margin of one layer with the upper most margin of its adjoining layer. If the layer thickness is known, the interlayer spacing can be determined by subtracting the layer thickness from the basal spacing.

The hydrocracking catalyst employed in the present invention comprises a layered silicate containing interspathic polymeric silica. The interlayer distance of the silicate is such that polycyclic hydrocarbon components of the feed can pass between adjacent layers of the silicate, preferably a distance greater than 10 angstroms or even 15 angstroms, e.g., 15 to 20 angstroms. The catalyst possesses hydrogenation and cracking activity, the latter of which may be provided by the presence of an interspathic polymeric oxide comprising an element selected from the group consisting of Al, B, Cr, Ga, In, Mo, Nb, Ni, Ti, Tl, W and Zr, e.g., polymeric alumina. Hydrogenation activity can be provided by incorporating any suitable hydrogenation component into the catalyst, e.g., an element selected from the group consisting of Ru, Rh, Pd, Os, In and Pt, e.g., palladium. These noble metals are particularly suited to applications where feeds to the hydrocracking stage are low in sulfur. In those instances where raw untreated feeds are to be processed, it would be more appropriate to use base metal hydrogenating components, particularly combinations of metals from Groups VI A (Cr, Mo, and W) and VIII A (Fe, Co, Ni, Ru, Rh, Pd, Os, Ir, and Pt) of the Periodic Table.

The process of the present invention utilizes a hydrocracking catalyst which comprises a layered silicate which contains interspathic polymeric silica and interspathic polymeric oxide of an element selected from the group consisting of Al, B, Cr, Ga, In, Mo, Nb, Ni, Ti, Tl, W and Zr, e.g., polymeric silica-alumina between the layers of the silicate material. Preferably, such "pillared" materials are thermally stable, i.e., capable of withstanding calcining at a temperature of about 450°C for at least 2 hours without significant reduction (e.g., not greater than 10 or 20%) in the spacing between the silicate layers. Preferably, such materials can withstand prolonged exposure to the conditions encountered during hydrocracking. Polymeric interspathic silicas displaced between silicate layers are considered to include oxides of two or more repeating units, preferably three or more repeating units, say four or more or even five or more repeating units. The extent of polymerization of the interspathic polymeric silica is believed to affect the ultimate interlayer separation of the layered product ; that is to say, the greater the extent of polymerization occurring, the greater the interlayer distance resulting in the pillared layered silicate. A layered material suited for use in the present hydrocracking process, having a desired interlayer spacing can be prepared according to the method set out in South African Patent Application No. 874644, filed June 26, 1987. In this method, the interlayer spacing of the layered material can be tailored by careful selection of the "propping" agent used to separate the layers during treatment with interspathic polymeric silica precursors which are eventually converted to the thermally stable polymeric silica "pillars." Indeed, a wide range of interlayer spacings can be achieved by this method. Interlayer distances can range anywhere from 2 to 30 angstroms or more, say, e.g., greater than 5, 10, 15 or 20 angstroms, depending largely on the type of "propping" agent used as well as the layered chalcogenide being treated. For the purpose of the present invention, interlayer distances which result in interlayer spacings large enough to accommodate polycyclic aromatics are desirable, e.g., interlayer spacings greater than 8 angstroms or preferably greater than 10 angstroms, e.g., 10 to 20 angstroms.

The pillared layered silicates employed herein can be prepared by treating a layered silicate which contains ion exchange sites having interspathic cations associated therewith, with an organic compound which is a cationic species or capable of forming a cationic species to effect exchange with the interspathic cations. An electrically neutral compound capable of conversion to the interspathic polymeric metal or non-metal oxide is provided between the layers of the treated layer silicate. The compound is then converted to the interspathic polymeric silica to form the layered material.

The pillared layered silicate employed in the present invention can be prepared by treating a layered silicate, e.g., a high silica alkali silicate such as synthetic magadiite, or synthetic kenyaite. These pillared layered silicate materials possess a framework composed essentially of only tetrahedral sheets, i.e. silicon is coordinated with four oxygen atoms, condensed on each other. These materials lack octahedral sheets, such as those found in clays, wherein an element such as aluminum is coordinated with six oxygen atoms. Besides interspathic polymeric silica, interspathic polymeric oxides of one or more elements selected from the group consisting of B, Al, Ga, In and Tl can also be incorporated between the layers of the silicate either separate from or incorporated into the interspathic polymeric silica pillars. Interspathic polymeric alumina is particularly useful in imparting acidic activity to the layered silicate. Interspathic polymeric oxides containing silica-alumina are a preferred pillar for these layered silicates.

Pillared silicates containing from 5 to 50 wt% silica-alumina incorporated as the pillar material are preferred. Particularly preferred are silicates containing from about 10 to 20 wt% silica-alumina as the pillared material. The silica/alumina molar ratio ($SiO_2/Al_2O_3$) of the pillared material may vary from 5 to 1000 or even greater.

Layered silicate materials of relatively high interplanar distance (d-spacing), e.g., greater than 10, 15, 18, 20, 25, or even 30 or more angstroms, can be prepared using the above-discussed techniques. These materials are capable of being exposed to calcining, at temperatures of 450°C for about two or more hours, e.g., four hours, in nitrogen or air, without significant decrease, e.g., less than about 10%, in interlayer distance. The size of interspathic polymeric silica contained within the final product can be greatly varied because the polymeric silica precursor species are introduced in an electrically neutral form such that the amount of interspathic material incorporated within the layered silicate is not dependent upon the charge density of the original layered silicate starting material. Charge density should be taken into consideration in determining the suitability of the cationic species introduced between the layers in the procedure used to prop open the layers prior to pillaring. The use of an electrically neutral polymeric oxide precursor allows the formation of materials in which the interlayer spacing can be widely varied.

The layered silicate starting material can contain ion exchange sites having interspathic cations associated therewith. Such interspathic cations may include hydrogen ion, hydronium ion or alkali metal cation. The starting material is treated with a "propping" agent comprising a source of organic cation, which source may include the cation itself, in order to effect an exchange of the interspathic cations resulting in the layers of the starting material being propped apart. In particular, alkylammonium cations have been found useful. Thus $C_3$ and larger alkylammonium cations, e.g., n-octylammonium, can be readily incorporated within the interlayer species of the layered silicates, serving to prop open the layers in such a way as to allow incorporation of the polymeric chalcogenide precursor. The extent of the interlayer spacing can be controlled by the size of the organoammonium ion employed so that use of the n-propylammonium cation can achieve a d-spacing of about 2 to 5A or an opening of about 2-3A, whereas to achieve an interlayer opening of 10 to 20A, an n-octylammonium cation or a cation of equivalent length is required. The organic ammonium cations separating the silicate layers may also be formed in situ by reaction of the neutral amine species with interlayer hydrogen or hydronium cations of the layered silicate starting material.

The polymeric oxide pillars are formed from a precursor material which is preferably introduced between the layers of the organic "propped" species as a cationic, or more preferably, electrically neutral, hydrolyzable compound of the desired elements. The precursor material is preferably an organic compound containing said desired elements which is a liquid under ambient conditions. In particular, hydrolyzable compounds, e.g., alkoxides, of the desired elements of the pillars are utilized as the precursors. Suitable polymeric silica precursor materials include tetraalkylsilicates, e.g. tetrapropylorthosilicate, tetramethylorthosilicate and, most preferably, tetraethylorthosilicate. Introduction of interspathic polymeric oxide of an element selected from the group consisting of Al, B, Cr, Ga, In, Mo, Nb, Ni, Ti, Tl, W, and Zr to the pillar system can be achieved by contacting a hydrolyzable compound of the desired element with the organic "propped" species before, after or simultaneously with the contacting of the layered chalcogenide with the silicon compound. Preferably, the hydrolyzable aluminum compound employed is an aluminum alkoxide, e.g., aluminum isopropoxide.

After hydrolysis to produce the polymeric oxide pillars and calcination to remove the organic propping agent, the final pillared product may contain residual exchangeable cations. Such residual cations in the layered material can be ion exchanged by known methods with other cationic species to provide or alter the catalytic activity of the pillared product. In particular, hydrogenation components containing at least one element selected from the group consisting of Ru, Rh, Pd, Os, Ir and Pt, preferably Pd, can be introduced by ion-exchange or impregnation techniques known in the art. Representative ion exchange techniques are disclosed in a wide variety of patents including U.S. 3,140,249 ; 3,140,251 ; and 3,140,253. Generally, the hydrocracking catalyst of the present invention can contain 0.1 to 20 weight percent, preferably 0.5 to 15 weight percent hydrogenation component.

The polymeric oxide precursor-containing product can be exposed to suitable conversion conditions, such as hydrolysis and/or calcination to form the layered material employed in the present invention. The hydrolysis step may be carried out by any method, for example, by interspathic water already present in the organic-"propped" layered silicate material. Because of the effect of interspathic water on hydrolysis, the extent of hydrolysis may be modified by varying the extent to which the organic-"propped" species is dried prior to addition of the polymeric oxide precursor. As noted earlier, the product after conversion to the polymeric oxide form may be exposed to conditions which remove organic compounds such as the organic cation propping agents, e.g., exposure to elevated temperatures such as those encountered by calcining in air or nitrogen. Such products, especially when calcined, exhibit high surface area, e.g., greater than 200, 300, 400 or even 600 $m^2/g$, and thermal and hydrothermal stability.

The pillared silicates can be composited with porous inorganic oxide matrix materials such as silica-alumina, silica-magnesia, silica-zirconia, silica-thoria, silica-beryllia, and silica-titania, as well as ternary compositions, such as silica-alumina-thoria, silica-alumina-zirconia, silica-alumina-magnesia and silica-magnesia-zirconia. The matrix may be in the form of a cogel. The relative proportions of pillared silicate component and inorganic matrix, on an anhydrous basis, may vary widely with the silicate content ranging from 1 to 99 percent by weight and more usually in the range of from 5 to 80 percent by weight of the dry composite.

Layered silicates, e.g., high silica alkali silicates such as magadiite, natrosilite, kenyaite, makatite, nekoite, kanemite, okenite, dehayelite, macdonaldite and rhodesite, unlike swellable clays, lack octahedral sheets, i.e., sheets composed of atoms which are octahedrally coordinated with oxygen atoms. Such high silica alkali silicates, as well as their synthetic analogues are well-suited as starting materials used in preparing the pillared layered silicates employed in the process of the present invention. Without stable intercalated pillars, these starting materials tend to undergo collapse of their layers at elevated temperatures, which results in low porosity and low surface area.

The layered silicate starting materials known as high silica alkali silicates, whose layers lack octahedral sheets, can be prepared hydrothermally from an aqueous reaction mixture containing silica and caustic at relatively moderate temperatures and pressures. These layered silicates may contain tetracoordinate framework atoms other than Si. Such layered silicates can be prepared by co-crystallizing in the presence of non-silicon tetravalent elements, e.g., those selected from the group consisting of B, Al, Ga, In and Tl as well as any other such elements which are catalytically useful when incorporated in the silicate structure. Alternatively, non-silicon framework elements already in a layered silicate may be substituted by a tetracoordinate element. Both co-crystallized and substituted layered high silica alkali silicates may be treated by the procedure described above to provide layered materials containing interspathic polymeric oxide pillars.

Synthetic magadiite-type materials which contain interspathic polymeric oxides are particularly suited to use in the hydrocracking process of the present invention. Synthetic magadiite is readily synthesized hydrothermally from a reaction mixture containing inexpensive sources of silica and caustic. Tetracoordinate elements other than silicon, e.g., those selected from the group consisting of B, Al, Ga, In, Tl and other catalytically useful metals, may be added to the reaction mixture to produce synthetic magadiite-type layered silicates. Preferably, such elements are selected from the group consisting of Al and Ga. An organic directing agent may also be added to the reaction mixture. The reaction mixture for synthetic layered silicate-type materials can be described in molar ratios as follows :

| | |
|---|---|
| $SiO_2/X_2O_3$ | =10 to infinity where X can be B, Al, B, Ga, In and/or Tl or other catalytically useful metal |
| $M^+OH^-/SiO_2$ | =0 to 0.6, (preferably 0.1-0.6) M = an alkali metal |
| $H_2O/SiO_2$ | =8-500 |
| $R/SiO_2$ | =0-0.4 |
| | where R can be an organic such as benzyltriethylammonium chloride, benzyltrimethylammonium chloride, dibenzyldimethylammonium chloride, N,N'-dimethylpiperazine, triethylamine, or other quaternary compounds or heterocyclic amines. |

The reaction mixture can be maintained at a temperature of about 100 to 200°C for anywhere from about 1 to 150 days in order to form a product having the following composition :

| | |
|---|---|
| % N | =0 to 3, e.g., 0 to 0.3 |
| $SiO_2/X_2O_3$ | =10 to infinity where X may be in the tetrahedral or octahedral position |
| $M_2O/SiO_2$ | =0 to 0.5, e.g., 0.05-0.1 |

The synthetic layered silicate materials thus prepared have a low surface area. Introduction of interspathic polymeric oxides according to the above-described procedure can increase the surface area of these materials. Generally, the synthetic magadiite-type (or layered silicate-type) material is acidified by any suitable means, e.g., treatment with aqueous 0.1 N HCl, and thereafter treated with a "propping" agent. A suitable compound capable of conversion to a polymeric oxide is combined with the "propped" layered silicate and the resulting material can then be calcined to remove residual organics.

Example 1 Preparation of Synthetic Magadiite Containing Interspathic Polymeric Silicon Oxides and Aluminum Oxides

A gel was produced by mixing 400 g of a fumed silica (Cabosil®) in 54.4 g of 98% NaOH and 1.4 kg water. The gel was crystallized in a 2 liter polypropylene jar at 100°C for 23 days to produce synthetic magadiite, which was then filtered, washed with hot water and dried at 121°C (250°F) overnight. The dried product had the following composition (wt%) :

| | |
|---|---|
| $SiO_2$ | 85.0 |
| $Na_2O$ | 6.4 |
| $Al_2O_3$ | 0.007 |

150 g of the dried high silica synthetic magadiite product were acid exchanged with a solution of 0.5N HCl at a pH of 2.0 for 24 hours, filtered, washed chloride-free and air dried. The dried sample was treated with an aqueous n-octylamine solution made up of 160 g (1.24 mol) of n-octylamine in 3,500 g (194.4 mol) of distilled water, for 24 hours at room temperature, filtered, washed and oven dried at 77°C (170°F) in vacuo. A solution of 19 g of aluminum isopropoxide (0.093 mol) in 747 g of tetraethylorthosilicate (3.6 mol) was heated in a steam chest overnight. Thereafter, 120 g (61.45% solids) of the octylammonium form of the magadiite were added to the solution and the resulting mixture was held in a sealed vessel for 24 hours at ambient temperature. The mixture was then filtered, air dried and calcined in flowing nitrogen for one hour followed by flowing air for two hours, at 538°C. The resulting product was a synthetic magadiite pillared with a polymeric oxide of silicon and a polymeric oxide of aluminum. The chemical analyses and physical properties for the calcined silica-alumina pillared magadiite are summarized below in Table 1.

## TABLE 1

Elemental Analyses

| | |
|---|---|
| $SiO_2$, wt% | 87.7 |
| $Al_2O_3$ | 2.7 |
| C | 0.027 |
| Ash @ 1000°C | 94.9 |

Physical Properties

| | |
|---|---|
| Surface area | 504 $m^2/g$ |

Sorptions, g/100g

| | |
|---|---|
| $H_2O$ | 19.1 |
| $c_yC_6$ | 15.1 |
| $n-C_6$ | 13.7 |
| Basal spacing (XRD) | 27°A ( 16°A interlayer opening) |
| Alpha (538°C) | 7 |

The silica-alumina pillared magadiite was rotary impregnated to incipient wetness with a 0.1 M aqueous solution of $Pd(NH_3)_4Cl_2$ under partial vaccum. The resulting material was rolled under a $CO_2$ atmosphere for one hour, dried at room temperature for four hours and then dried at 121°C. The dried catalyst was calcined for 3 hours at 349°C in static air. The calcined catalyst was determined to contain 0.42 wt% Pd.

Example 2 Hydrocracking Using Silica-Alumina (Prior Art)

Two raw petroleum streams having the characteristics set out in Table 2 below were hydroprocessed over a Ni-Mo/alumina hydrotreating catalyst at 13900 kPa (2000 psig) and 393°C (740°F).

### TABLE 2

| Feed | Statjford Deasphalted Pesid "SDAR" | Arab Light Raw Hvy. Distillate "ALR HD" |
|---|---|---|
| %H | 12.96 | 12.29 |
| %S | 0.76 | 2.78 |
| ppm N | 1200 | 1000 |
| Density, g/cc | 0.893 | 0.932 |
| API Gravity | 27 | 20.3 |
| Pour Point, °F | 120 | 110 |
| °C | 49 | 43 |
| Hydrotreating LHSV | 0.5 | 0.3 |

#### Product

| | | |
|---|---|---|
| %H | 14.1 | 13.69 |
| %S | 0.01 | 0.01 |
| ppm N | 12 | 12 |
| Pour Point, °F | 120 | 110 |
| °C | 49 | 43 |

The hydrotreated "SDAR" was hydrocracked using a commercial silica-alumina catalyst at a hydrogen pressure of 13200 kPa (1900 psig) a space velocity of 2, at 360°C (680°F).

Additional conversion conditions along with properties of the total liquid product and 343°C+ (650°F+) (lube range) product are given in Table 3.

### TABLE 3

#### Total Product

| | |
|---|---|
| 343°C+ (650°F+) Conversion, wt % | 25 |
| Pour Point, °F | 70 |
| °C | 21 |

#### Lube Properties

| | |
|---|---|
| Pour Point  °C | 43 |
| Pour Point, °F | 110 |
| %H | 13.97 |
| Aromatics by Silica Gel | 15.5 |

Example 3 Hydrocracking Using Ultrastable Y Zeolite (Prior Art)

The procedure of Example 2 was followed except that the hydrocracking catalyst was an alumina bound, large pore ultrastable (USY) Y zeolite containing palladium.

The USY catalyst used was prepared using conventional procedures. The palladium was impregnated as described for the pillared magadiite. The USY catalyst was characterized as follows :

| | |
|---|---|
| surface area, $m^2/g$ | 407 |
| Na, wt% | 0.066 |
| Pd, wt% | 0.66 |

Both of the hydrotreated feeds shown in Table 2 were hydrocracked at conditions shown in Table 4. The results in terms of conversions and lube range properties are shown in Table 4.

TABLE 4

| Feed | "SDAR" | "ALR HD" |
|---|---|---|
| Temp, °F | 610 | 620 |
| °C | 321 | 327 |
| Pressure, psig | 1900 | 1900 |
| kPa | 13200 | 13200 |
| LHSV | 1.8 | 1.8 |
| Total Liquid Properties | | |
| 343°C (650°F+) Converted, wt % | 55 | 45 |
| Pour Point, °F | 80 | 70 |
| °C | 27 | 21 |
| 343°C+ (650°F+) Properties | | |
| Pour Point, °F | 120 | 110 |
| °C | 49 | 43 |
| %H | 13.96 | 14.31 |
| % Aromatics by Silica Gel | 9.9 | 15.2 |

Example 4 Hydrocracking Using Silica-Alumina Pillared Magidiite (Invention)

The procedure of Example 2 was followed except that the Pd-containing pillared magadiite catalyst of Example 1 was used. Table 5 below shows hydrocracking results obtained at two different operating conditions for the hydrotreated Statfjord deasphalted resid, "SDAR" and one condition for the hydrotreated Arab Light heavy distillate "ALR HD".

## TABLE 5

### Hydrocracking With Silica-Alumina Pillared Magadiite

| Feed | SDAR | | ALR HD |
|---|---|---|---|
| Reactor Temp, °F | 700°F | 750°F | 700°F |
| °C | 371 | 399 | 371 |
| Pressure, psig | 1900 | 600 | 1900 |
| kPa | 13200 | 4200 | 13200 |
| LHSV | 2 | 2 | 2 |
| **Total Liquid** | | | |
| 343°C+ Conversion, wt % | 30 | 30 | 64 |
| Pour Point, °F | 45 | 45 | -5 |
| °C | 7 | 7 | -21 |
| Cloud Point °F | | | 2 |
| °C | | | -17 |
| **Lube Properties** | | | |
| Pour Point, °F | 85 | 65 | 90 |
| °C | 30 | 18 | 32 |
| KV @ 40°C | | | 34.97 |
| %H | 14.40 | 14.1 | 14.51 |
| %C$_A$ | 11 | 9 | 5 |
| Aromatics by Silica Gel % | 5.4 | 19.6 | 4.2 |

Comparing results on the hydrotreated "SDAR", the pillared magadiite produces a less aromatic lube range product than either the amorphous silica-alumina or USY zeolite. The pillared magadiite also preserves more of the product in the lube boiling range than the USY zeolite and almost as much as the amorphous silica-alumina.

Table 5 also shows that products derived from the synthetic magadiite had lower pour points in both the lube and full range products than those from other hydrocracking catalysts. Since further dewaxing to low pour −7°C or below (20°F or below) is necessary yields of finished lube are higher in those cases where a synthetic magadiite hydrocracking catalyst was used. Similar results are shown in Table 5 for the hydrotreated ALR HD.

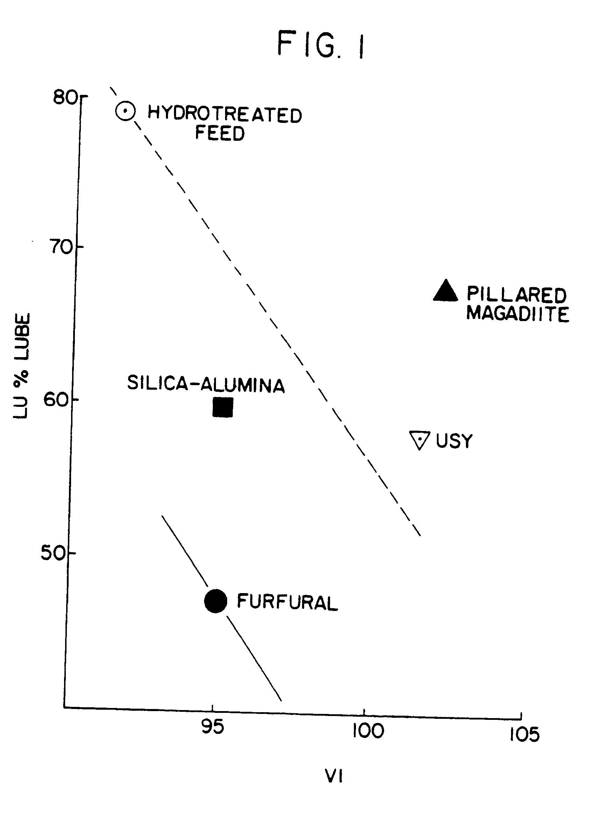

After catalytic dewaxing to −12°C (10°F) pour of all product, the yield loss versus viscosity index improvement for feeds derived from hydrotreated Statfjord deasphalted resid over various hydrocracking products was plotted in Figure 1, along with a hydrotreated feed which was not subjected to hydrocracking and a feed which was solvent extracted with furfural. All of the products were dewaxed to a pour point of −12°C (10°F) with ZSM-5 before measuring yield and viscosity index. The 343°C (650°F+) yield of the hydrotreated feed was 79% by volume. Viscosity index was 92. Example 4, hydrocracking with pillared magadiite gave a 343°C+ yield of 68% by volume. Viscosity index was 102. In example 2, hydrocracking with a silica-alumina catalyst gave a 343°C+ yield of 60% by volume at a viscosity index of only 95. The yield in Example 3, using USY, was only 58%, although viscosity index was 102. Finally, the furfural treated solvent dewaxed a 343°C+ yield was 47% at a viscosity index of 95. Figure 1 shows that the pillared magadiite hydrocracking catalyst provides a lube product of increased viscosity index at enhanced yields over conventional amorphous hydrocracking catalysts as well as large pore zeolites.

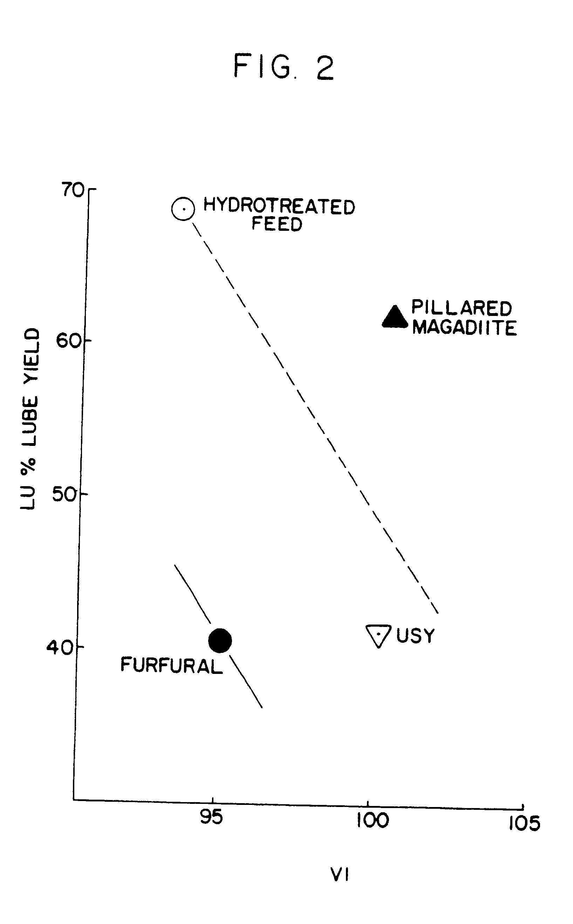

Figure 2 is similar to Figure 1 except that instead of the residual feed, the distillate derived feed hydrotreated Arab Light Heavy Distillate is employed. The results are similar in that the pillared magadiite catalyst produces lube hydrocrackate in higher yield and at enhanced viscosity index than techniques which employ conventional catalysts.

The more open structure of the pillared layered magadiite is apparent from the boiling range of the lubes produced by pillared silicate as opposed to large pore USY zeolite, as shown in Table 6 below.

TABLE 6

CHARACTERISTICS OF PRODUCTS FROM EXAMPLES 3 & 4


STATFJORD DAO FEED

| Hydrocracking Catalyst | Pd-USY | | Pd-Pillared Magadiite | |
|---|---|---|---|---|
| Lube Yield, % | 58 | | 68 | |
| Viscosity, SUS | 820 | | 640 | |

| Boiling Range | °F | °C | °F | °C |
|---|---|---|---|---|
| 10 % | 750 | 399 | 720 | 382 |
| 20 % | 875 | 468 | 807 | 431 |
| 50 % | 1034 | 557 | 992 | 533 |
| 610°C+ | 21% | ___ | 12% | ___ |
| (1130°F+) | 21% | ___ | 12% | ___ |

Considerable reductions in the 610°C⁺ (1130°F⁺) fraction of lubes are evident from the treatment with pillared silicate which indicates that large molecules are more readily converted in the layered silicate.


**Claims**

1. A process for producing a lubricating oil base stock from a hydrocarbon feed by hydrocracking at conventional hydrocracking conditions a hydrocarbon feed boiling in the lube range and containing polycyclic aromatics characterized by use of a hydrocracking catalyst having cracking and hydrogenation activity and comprising a layered silicate containing interspathic polymeric silica and interspathic polymeric oxide of an element selected from the group consisting of Al, B, Cr, Ga, In, Mo, Nb, Ni, Ti, Tl, W and Zr, in order to produce a hydrocrackate boiling in the lube range which contains a lesser proportion of polycyclic aromatics than the feed.

2. The process of claim 1 further characterized in that the conversion of feed to materials boiling below the lube range is less than 50% by volume.

3. The process of claim 1 further characterized in that the feed is hydrotreated prior to hydrocracking.

4. The process of any preceding claim further characterized in that the hydrocrackate is dewaxed to a pour point below −4°C (25°F).

5. The process of any preceding claim further characterized in that the feed contains at least 20 volume percent of a fraction boiling above 610°C (1130°F) and the hydrocrackate contains less than 15 volume percent of a fraction boiling above 610°C (1130°F).

6. The process of any preceding claim further characterized in that the interspathic polymeric silica has an interlayer distance greater than 10 angstroms.

7. The process of claim 6 further characterized in that the interlayer distance is greater than 15 angstroms.

8. The process of any preceding claim further characterized in that the layered silicate contains an interspathic polymeric oxide of aluminum.

9. The process of any preceding claim further characterized in that the catalyst contains 0.1 to 20 wt.% of at least one of Ru, Rh, Pd, Os, Ir and Pt.

10. The process of claim 9 further characterized in that the catalyst contains 0.3 to 5 wt.% Pd.

11. The process of any preceding claim further characterized in that the layered silicate is selected from the group consisting of magadiite, natrosilite, kenyaite, makatite, nekoite, kanemite, okenite, dehayelite, macdonaldite and rhodesite.

12. The process of claim 11 further characterized in that the layered silicate is magadiite.

**Patentansprüche**

1. Verfahren zur Herstellung eines Schmieröl-Grundmaterials aus einer Kohlenwasserstoffzufuhr durch Hydrocracken einer Kohlenwasserstoffzufuhr bei üblichen Hydrocrackbedingungen, die im Schmierölbereich siedet und polycyclische Aromaten enthält, gekennzeichnet durch die Verwendung eines HydrocrackKatalysators, der Crack- und Hydrierungsaktivität aufweist und ein Schichtsilicat umfaßt, das ein dazwischenliegendes polymeres Siliciumdioxid und ein dazwischenliegendes poylmeres Oxid eines Elementes enthält, das aus der Gruppe ausgewählt ist, die aus Al, B, Cr, Ga, In, Mo, Nb, Ni, Ti, Tl, W und Zr besteht, um ein Hydrocrackprodukt zu erzeugen, das im Schmierölbereich siedet, das einen geringeren Anteil polycyclischer Aromaten enthält als die Zufuhr.

2. Verfahren nach Anspruch 1, außerdem dadurch gekennzeichnet, daß die Umwandlung der Zufuhr zu Materialien, die unter dem Schmierölbereich sieden, weniger als 50 Vol.-% beträgt.

3. Verfahren nach Anspruch 1, außerdem dadurch gekennzeichnet, daß die Zufuhr vor dem Hydrocracken einer Hydrobehandlung unterzogen wird.

4. Verfahren nach einem der vorstehenden Ansprüche, weiterhin dadurch gekennzeichnet, daß das Hydrocrackprodukt bis zu einem Pourpoint von unter −4°C (25°F) entparaffiniert wird.

5. Verfahren nach einem der vorstehenden Ansprüche, weiterhin dadurch gekennzeichnet, daß die Zufuhr mindestens 20 Vol.-% der Fraktion enthält, die oberhalb 610°C (1130°F) siedet, und das Hydrocrackprodukt weniger als 15 Vol.-% der Fraktion enthält, die oberhalb 610° (1130°F) siedet.

6. Verfahren nach einem der vorstehenden Ansprüche, weiterhin dadurch gekennzeichnet, daß das dazwischenliegende polymere Siliciumdioxid einen Zwischenschichtabstand von mehr als 10 Angström aufweist.

7. Verfahren nach Anspruch 6, weiterhin dadurch gekennzeichnet, daß der Zwischenschichtabstand größer als 15 Angström ist.

8. Verfahren nach einem der vorstehenden Ansprüche, weiterhin dadurch gekennzeichnet, daß das Schichtsilicat ein dazwischenliegendes Polymeroxid von Aluminium enthält.

9. Verfahren nach einem der vorstehenden Ansprüche, weiterhin dadurch gekennzeichnet, daß der Katalysator 0,1 bis 20 Gew.-% von zumindest einem der Elemente Ru, Rh, Pd, Os, Ir und Pt enthält.

10. Verfahren nach Anspruch 9, weiterhin dadurch gekennzeichnet, daß der Katalysator 0,3 bis 5 Gew.-% Pd enthält.

11. Verfahren nach einem der vorstehenden Ansprüche, weiterhin dadurch gekennzeichnet, daß das Schichtsilicat aus der Gruppe ausgewählt ist, die aus Magadiit, Natrosilit, Kenyait, Makatit, Nekoit, Kanemit, Okenit, Dehayelit, Macdonaldit und Rhodesit besteht.

12. Verfahren nach Anspruch 11, weiterhin dadurch gekennzeichnet, daß das Schichtsilicat Magadiit ist.

**Revendications**

1. Un procédé de préparation d'une huile de base lubrifiante à partir d'une charge d'hydrocarbures par hydrocraquage dans les conditions classiques d'hydrocraquage d'une charge d'hydrocarbures bouillant dans l'intervalle des lubrifiants et contenant des aromatiques polycycliques, caractérisé en ce que l'on utilise un catalyseur d'hydrocraquage présentant une activité de craquage et d'hydrogénation et comprenant un silicate stratifié contenant de la silice polymère interspathique et un oxyde polymère interspathique d'un élément choisi dans le groupe constitué de Al, B, Cr, Ga, In, Mo, Nb, Ni, Ti, Ti, W et Zr, en vue de préparer un produit d'hydrocraquage bouillant dans l'intervalle des lubrifiants et qui contienne une proportion d'aromatiques polycycliques inférieure à celle de la charge.

2. Le procédé selon la revendication 1, caractérisé en ce que la conversion de la charge en matériau bouillant en-dessous de l'intervalle des lubrifiants est inférieure à 50% en volume.

3. Le procédé selon la revendication 1, caractérisé en ce que la charge est hydrotraitée avant l'hydrocraquage.

4. Le procédé selon l'une quelconque des revendications précédentes, caractérisé en ce que le produit d'hydrocraquage est déparaffiné jusqu'à obtention d'un point d'écoulement inférieur à −4°C (25°F).

5. Le procédé selon l'une quelconque des revendications précédentes, caractérisé en ce que la charge contient au moins 20% en volume d'une fraction bouillant au-dessus de 610°C (1130°F) et le produit hydrocraqué contient moins de 15% en volume d'une fraction bouillant au-dessus de 610°C (1130°F).

6. Le procédé selon l'une quelconque des revendications précédentes, caractérisé en ce que la silice polymère interspathique présente une distance intercouche supérieure à 10 angströms.

7. Le procédé selon la revendication 6, caractérisé en ce que la distance intercouche est supérieure à 15 angströms.

8. Le procédé selon l'une quelconque des revendications précédentes, caractérisé en ce que le silicate stratifié contient un oxyde polymère interspathique d'aluminium.

9. Le procédé selon l'une quelconque des revendications précédentes, caractérisé en ce que le catalyseur contient de 0,1 à 20% en poids d'au moins l'un d'entre les éléments suivants : Ru, Rh, Pd, Os, Ir et Pt.

10. Le procédé selon la revendication 9, caractérisé en ce que le catalyseur contient de 0,3 à 5% en poids de Pd.

11. Le procédé selon l'une quelconque des revendications précédentes, caractérisé en ce que le silicate stratifié est choisi dans le groupe constitué par : magadiite, natrosilite, kenyaite, makatite, nékoite, kanémite, okénite, déhayélite, macdonaldite et rhodésite.

12. Le procédé selon la revendication 11, caractérisé en ce que le silicate stratifié est la magadiite.

FIG. 1

# FIG. 2